# EUROPÄISCHE PATENTSCHRIFT

(11) **EP 2 635 615 B1**
(45) Veröffentlichungstag und Bekanntmachung des Hinweises auf die Patenterteilung: **05.04.2017**
(21) Anmeldenummer: 11782102.5
(22) Anmeldetag: 03.11.2011
(51) Int. Cl.: C08G 18/08, C08J 9/12

(54) **EMULSIONSFÖRMIGE REAKTIONSMISCHUNG UND VERFAHREN ZUR HERSTELLUNG VON POLYURETHANSCHÄUMEN AUS EINER SOLCHEN REAKTIONSMISCHUNG**
REACTION MIXTURE IN THE FORM OF AN EMULSION AND PROCESS FOR PRODUCTION OF POLYURETHANE FOAMS FROM SUCH A REACTION MIXTURE
MÉLANGE RÉACTIONNEL SOUS FORME D'ÉMULSION ET PROCÉDÉ POUR LA FABRICATION DE MOUSSES POLYURÉTHANE À PARTIR D'UN TEL MÉLANGE RÉACTIONNEL

(30) Priorität: 05.11.2010 DE 102010060390
(43) Veröffentlichungstag der Anmeldung: 11.09.2013
(73) Patentinhaber: Covestro Deutschland AG, 51373 Leverkusen (DE)
(72) Erfinder: FRIEDERICHS, Wolfgang, 50933 Köln (DE); LINDNER, Stefan, 50670 Köln (DE); STREY, Reinhard, 41540 Dormagen (DE); SOTTMANN, Thomas, 50823 Köln (DE); KHAZOVA, Elena, LS17 7NF Leeds (GB); KRAMER, Lorenz, 51149 Köln (DE); DAHL, Verena, 51429 Bergisch Gladbach (DE)
(74) Vertreter: Levpat
(86) Internationale Anmeldenummer: PCT/EP2011/069343
(87) Internationale Veröffentlichungsnummer: WO 2012/059547

(56) Entgegenhaltungen:
- WO-A1-01/98389
- DE-A1- 10 260 815
- US-A1- 2004 054 022

## Beschreibung

Die vorliegende Erfindung betrifft eine emulsionsförmige Reaktionsmischung, geeignet zur Weiterreaktion zu Polyurethanen, umfassend eine erste und eine zweite Phase in der Emulsion und weiterhin umfassend Polyole, Treibmittel, Tenside und Isocyanate. Sie betrifft weiterhin ein Verfahren zur Herstellung von Polyurethanschäumen unter Bereitstellung einer solchen Reaktionsmischung, die Verwendung einer solchen Reaktionsmischung zur Herstellung von Polyurethanschäumen sowie die erhaltenen Polyurethanschäume.

Ein Ziel gegenwärtiger technischer Forschungen und Entwicklungen ist es nanozelluläre Schäume zu erzeugen. Ein Anwendungsbereich nanozellulärer Schäume ist beispielsweise die thermische Isolation von Gebäuden, Rohrisolierungen und Kühlschränken. Hierbei kann man sich den Knudsen-Effekt zu Nutze machen. Liegen die inneren Strukturen der Schäume im Bereich der mittleren freien Weglänge der Gasmoleküle, sinkt die Wärmeleitfähigkeit deutlich. Für die thermische Isolation soll der Schaum vorzugsweise in großen Blöcken erzeugbar sein. Konventioneller Schaumkunststoff enthält typischerweise 10³ bis 10⁶ Blasen pro cm³. Es wäre wünschenswert, die Blasendichte auf über 10⁹ cm⁻³ anzuheben.

Zur Herstellung polymerer Schäume werden verschiedene Treibmittel eingesetzt. Hierbei werden die zu schäumenden Polymere, polymeren Fluide oder polymerisierbaren Mischungen mit Hilfe des Treibmittels aufgeschäumt. Dieses kann gasförmig sein oder eine leichtflüchtige Komponente, die durch die Reaktionswärme der Polymerisation oder durch Aufheizen verdampft wird.

Dabei wird das System übersättigt und es entsteht die Tendenz zur Gasblasenbildung. Das System ist in diesem Zustand weit von seinem thermodynamischen Gleichgewicht entfernt, zu dessen Erreichen ein Nukleationsschritt der Gasblasen notwendig ist. Dieser Prozess involviert sowohl für homogene als auch heterogene Nukleation eine Energiebarriere, die zur Bildung jeder individuellen Blase überwunden werden muss. Die entstehenden Schäume sind makrozellulär.

In der Regel sind die Details von Nukleationsvorgängen in technischen Anwendungen wenig bekannt und schwer kontrollierbar. Bei Veränderungen kann es zu einer starken Variabilität des Produktes hinsichtlich der Homogenität und Eigenschaften des Schaumes kommen. Durch Zugabe von Partikeln oder dem Einbringen von Luftblasen wird versucht Nukleation zu initiieren, jedoch können damit keine sehr hohen Anzahldichten an Blasen erreicht werden. Hinzu kommt, dass die heterogenen Partikel im Endprodukt verbleiben.

Als Ausweg vom Erfordernis sehr hoher Drücke bieten sich Mikroemulsionen an. In diesen werden Wasser und Öl mit Hilfe eines Tensids in eine makroskopisch homogene, thermodynamisch stabile, nanometerfein strukturierte Dispersion gebracht. Durch die gezielte Wahl von Zusammensetzung, Druck und Temperatur können verschiedenste Strukturen eingestellt werden. So liegt in Öl-in-Wasser (o/w) Mikroemulsionen das Öl in Form nanometergroßer Öltröpfchen, die von einem Tensidfilm ummantelt sind, vor. Das Öl, in der Regel ein kondensierter Kohlenwasserstoff, kann aber auch durch kurzkettige Kohlenwasserstoffe, wie Ethan, Propan usw. oder durch CO₂ ersetzt werden. In der jüngeren Fachliteratur werden insbesondere die umgekehrt strukturierten Wasser-in-Öl oder Wasser-in-CO₂ Mikroemulsionen beschrieben. Dort wird die wässrige Komponente als interne und das überkritische Fluid als externe Phase eingesetzt. Es sind in jüngster Zeit auch Mikroemulsionen aus nichtwässrigen, polaren Komponenten und sogar aus Homopolymeren und amphiphilen Blockcopolymeren beschrieben worden.

Im POSME-Verfahren (principle of supercritical micro emulsion expansion) liegt das Treibmittel in Form von sehr kleinen Tröpfchen innerhalb der polaren Phase einer Mikroemulsion vor. Die Durchmesser solcher Tröpfchen können in einem Bereich von 1 bis 100 Nanometern liegen.

Das POSME-Verfahren wird in DE 102 60 815 A1 beschrieben. Diese Patentanmeldung offenbart aufgeschäumtes Material und ein Herstellverfahren für das aufgeschäumte Material. Aufgeschäumtes Material mit Schaumblasen in Nanogröße soll erzeugt werden, ohne dass die Energiebarriere, die üblicherweise bei Phasenumwandlungen und Keimbildungsprozessen auftritt, überwunden werden muss. Verbunden damit ist das Ziel, ein aufgeschäumtes Material kontrollierbar zu erzeugen, welches eine Anzahldichte von Schaumblasen zwischen 10¹² und 10¹⁸ pro cm³ sowie einen mittleren Durchmesser der Schaumblasen zwischen 10 nm und 10 µm hat. Grundlage ist die Dispersion eines zweiten Fluids in Form von Pools in einer Matrix eines ersten Fluids. In einem Reaktionsraum liegen das erste Fluid als Matrix und das zweite Fluid in Pools vor. Durch Druck- und/oder Temperaturänderung wird das zweite Fluid in einen nahe- oder überkritischen Zustand mit einer flüssigkeitsnahen Dichte überführt. Somit liegt das zweite Fluid vollständig oder nahezu vollständig in Pools vor, die im gesamten ersten Fluid gleichmäßig verteilt sind. Durch Druckentlastung kehrt das zweite Fluid in einen Zustand gasförmiger Dichte zurück, wobei die Pools zu Schaumblasen in Nanometer-Größe aufgebläht werden. Es muss keine Energiebarriere überwunden werden, noch müssen die Treibmittelmoleküle zu den wachsenden Blasen diffundieren.

Als erstes Fluid wird hier allgemein eine polymerisierbare Substanz vorgeschlagen. Ausdrücklich erwähnt werden jedoch nur Acrylamid, welches zu Polyacrylamid polymerisiert, und Melamin, welches zu Melamin-Harz polymerisiert. Das zweite Fluid sollte aus einer Stoffgruppe von Kohlenwasserstoffen wie Methan oder Ethan, weiterhin Alkanolen, Fluorchlorkohlenwasserstoffen oder CO₂ ausgewählt sein. Weiterhin wird ein amphiphiles Material eingesetzt, welches mindestens einen dem ersten Fluid zugeneigten Block und mindestens ein dem zweiten Fluid zugeneigten Block aufweisen sollte.

In dieser Patentanmeldung liegen also die Reaktionskomponenten, die zur Bildung eines Polymers gebraucht werden, in derselben Phase der Emulsion vor.

Ein weiteres Beispiel für eine polymerisierbare Reaktionsmischung in einem überkritischen Lösungsmittel wird in US 5,387,619 offenbart. Dieses Patent betrifft ein Verfahren zur Hemmung von chemischen Reaktionen in einem fluidförmigen reaktiven organischen Material durch Mischen mit einem überkritischen oder nahekritischen Fluid, insbesondere überkritischem Kohlendioxid. Das Verfahren beinhaltet die Möglichkeit, eine normalerweise zwischen funktionell kompatiblen organischen Molekülen ablaufende chemische Reaktion durch Einsatz eines überkritischen Fluids, vorzugsweise Kohlendioxid, zu unterbinden. Die Reaktion kann dann zu einem vorbestimmten, aber vom Normalen abweichenden Zeitpunkt ablaufen. So wird unter anderem ein System aus einem Polyol, Kohlendioxid, einem Katalysator und MDI beschrieben. Erst nach Druckerniedrigung auf unterkritische Bedingungen setzte die Polyaddition ein, was anhand eines raschen Anstiegs der Viskosität der Mischung beobachtet wurde.

Bei der Herstellung von Polyurethanschäumen kann überkritisches Kohlendioxid gemäß EP 0 353 061 A2 in der TDI-Komponente gelöst werden und so als Treibmittel bei der Schaumbildung dienen. Über mikrozelluläre oder Nanozelluläre Schäume wird jedoch nichts berichtet.

Eine weitere Möglichkeit zur Herstellung von Polymeren ist die der Grenzflächenpolymerisation (engl. interfacial polymerisation). Hierbei kommen zwei Reaktionspartner, die das Polymer bilden, an einer Phasengrenzfläche zur Reaktion. Ein bekanntes Beispiel ist die Herstellung von Nylon 6,10, bei dem Hexamethylendiamin mit Sebacinsäurechlorid in jeweils geeigneten Lösemitteln, wobei sich die Lösemittel aber nicht mischen, über die makroskopische Grenzfläche zur Reaktion gebracht werden.

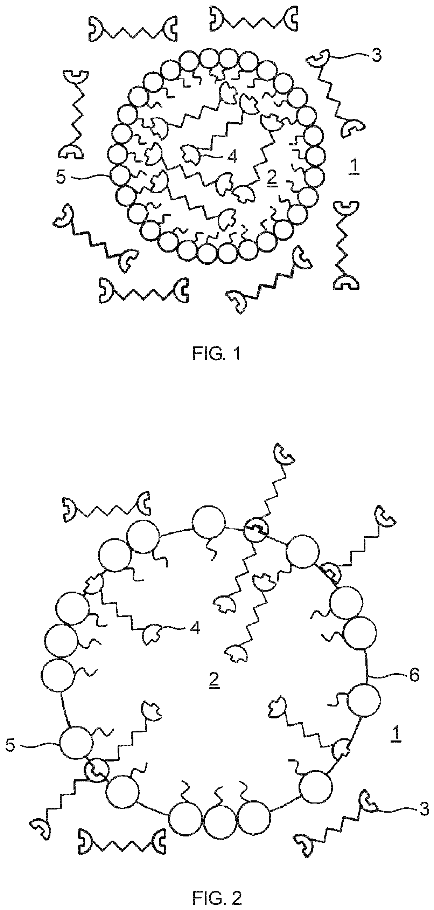

Ein Beispiel für die Herstellung eines Schaums mit chemischen Komponenten in beiden Phasen wird in WO 2004/050752 A1 offenbart. Diese Patentanmeldung betrifft Zusammensetzungen und Verfahren zur Herstellung von high-internal-phase-emulsion-Schäumen (HIPE-Schäumen) und inverse-high-internal-phase-emulsion-Schäumen (I-HIPE-Schäumen) unter Verwendung von überkritischen Fluiden. Solche Schäume können unter anderem in Absorptionsartikeln Verwendung finden. In dem Verfahren wird eine Wasserphase und eine überkritische Fluidphase kombiniert, wobei die Wasserphase eine wirksame Menge wenigstens eines Superabsorber-Vorläufer-Monomers umfasst. Ein Oxidationsinitiator in einer der überkritischen Phasen oder der Wasserphase und ein Reduktionsinitiator in der anderen der überkritischen Phasen und der Wasserphase werden kombiniert. Die überkritische Phase und die Wasserphase bilden eine Emulsion und die Polymerisation des wenigstens einen Superabsorber-Vorläufer-Monomers findet in der Wasserphase statt. Insgesamt findet also nach der Kombination von Oxidationsinitiator und Reduktionsinitiator eine Redoxpolymerisation statt, jedoch nicht an der Phasengrenze von Wasserphase und überkritischer Fluidphase. Das Dokument US2004/0054022 A1 offenbart die Herstellung von Polyurethanschäumen wobei die Polyol-Seite 1-2% CO₂ in überkritischen Zustand enthält. Das Isocyanat wird separat zu dem Mischkopf geführt und dort mit der Polyol-Seite gemischt (siehe Abbildung 1 und Absatz [0046]). Aus dem Vorangegangenen wird deutlich, dass weiterhin der Bedarf an alternativen Verfahren zur Herstellung von Polyurethanschäumen mit kleineren Zellgrößen sowie an in diesen Verfahren eingesetzten Reaktionsmischungen besteht.
Erfindungsgemäß gelöst wird diese Aufgabe durch eine emulsionsförmige Reaktionsmischung, geeignet zur Weiterreaktion zu Polyurethanen, umfassend eine erste und eine zweite Phase in der Emulsion und weiterhin umfassend die folgenden Komponenten:
A) gegenüber Isocyanaten reaktive Verbindungen, ausgewählt aus der Gruppe umfassend Polyole, Polyetherpolyole, Polyesterpolyole, Polycarbonatpolyole, Polyetheresterpolyole, und/oder Polyacrylatpolyole, wobei weiterhin die OH-Zahl dieser Komponente A) ≥ 100 mg KOH/g bis ≤ 800 mg KOH/g, bevorzugt ≥ 350 mg KOH/g bis ≤ 650 mg KOH/g, beträgt und die durchschnittliche OH-Funktionalität dieser Komponente A) ≥2 beträgt;
B) Treibmittel, ausgewählt aus der Gruppe umfassend lineare, verzweigte oder cyclische C₁- bis C₅-Alkane, lineare, verzweigte oder cyclische C₁- bis C₅-Fluoralkane und/oder CO₂;
C) Tenside, ausgewählt aus der Gruppe umfassend alkoxylierte Alkanole, alkoxylierte Alkylphenole, alkoxylierte Fettsäuren, Fettsäureester, Polyalkylenamine, Alkylsulfate, Alkylpolyether, Alkylpolyglucoside, Phosphatidylinositole, fluorierte Tenside, Polysiloxangruppen umfassende Tenside und/oder Bis(2-ethyl-1-hexyl)sulfosuccinat; und
D) Isocyanate mit einer NCO-Funktionalität von ≥ 2;
wobei die gegenüber Isocyanaten reaktive Verbindungen A) in der ersten Phase der Emulsion vorliegen und das Treibmittel B) in der zweiten Phase.
Die erfindungsgemäße Zusammensetzung ist dadurch gekennzeichnet, dass das Treibmittel B) im nahekritischen oder überkritischen Zustand vorliegt und dass weiterhin das Isocyanat D) in der zweiten Phase enthalten ist in einem Anteil von ≥ 10 Gewichts-% der Gesamtmenge an Isocyanat D) in der Zusammensetzung.

In der erfindungsgemäßen Reaktionsmischung liegen folglich zwei wenigstens teilweise nicht miteinander mischbare Phasen nebeneinander vor, wobei die erste Phase Polyole umfasst und die zweite Phase das Treibmittel und das Isocyanat. Vorzugsweise liegt die zweite Phase als interne Phase vor, also beispielsweise tröpfchenförmig innerhalb der ersten Phase. Das Treibmittel liegt im überkritischen Zustand vor, es herrschen also Bedingungen oberhalb der kritischen Temperatur T_{c} und des kritischen Drucks p_{c}. Es kann aber auch im nahekritischen Zustand vorliegen. Hierunter ist zu verstehen, dass bei der Temperatur T die kritische Temperatur T_{c} des Treibmittels der Bedingung (T_{c} - T)/T ≤ 0,4 genügt. Diese Bedingung kann auch (T_{c} - T)/T ≤ 0,3 oder (T_{c} - T)/T ≤ 0,2 lauten.

Das Treibmittel kann beispielsweise in einer Tröpfchengröße von ≥ 1 nm bis ≤ 100 nm vorliegen. Die Tröpfchengröße kann auch ≥ 3 nm bis ≤ 30 nm betragen. Sie kann beispielsweise mittels dynamischer Lichtstreuung oder Neutronenkleinwinkelstreuung bestimmt werden und ist als Mittelwert der Tröpfchengrößen zu verstehen. Solche Tröpfchengrößen werden insbesondere erreicht, wenn die erfindungsgemäße Reaktionsmischung als Mikroemulsion vorliegt. Eine geringe Tröpfchengröße ist vorteilhaft, da sie bei einer Weiterverarbeitung der Zusammensetzung zu Polymerschäumen eine kleine Zellgröße im erhaltenen Schaum bewirkt.

Weiterhin vorgesehen ist, dass das Isocyanat in der zweiten Phase zu ≥ 10 Gewichts-% der Gesamtmenge an Isocyanat in der Zusammensetzung enthalten ist. Der Anteil kann aber auch höher sein, also beispielsweise ≥ 80 Gewichts-% oder ≥ 90 Gewichts-%. Das Isocyanat kann in der Treibmittelphase gelöst, suspendiert, emulgiert oder in sonstiger Form enthalten sein.

Nach dem Bilden der Reaktionsmischung kann durch das Einstellen von unterkritischen Bedingungen das emulgierte Treibmittel in die Gasphase übergehen und so einen mikrozellulären oder nanozellulären Schaum bilden. Gleichzeitig wird das Isocyanat für eine Grenzflächenpolymerisation mit dem Polyol verfügbar, wodurch die Zellwände des Schaums aushärten. Ohne auf eine Theorie festgelegt zu sein, wird angenommen, dass die Tensidmenge nicht mehr ausreicht, um Polyol und Isocyanat voneinander zu trennen. Unter Grenzflächenpolymerisation ist hier auch die Grenzflächenpolyaddition von Polyolen und Isocyanaten zu verstehen.

Die erfindungsgemäß verwendbaren Polyole können beispielsweise ein zahlenmittleres Molekulargewicht Mₙ von ≥ 62 g/mol bis ≤ 8000 g/mol, bevorzugt von ≥ 90 g/mol bis ≤ 5000 g/mol und mehr bevorzugt von ≥ 92 g/mol bis ≤ 1000 g/mol aufweisen. Die OH-Zahl der Komponente A) gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der genannten Polyole ist ≥ 2, beispielsweise in einem Bereich von ≥ 2 bis ≤ 6, vorzugsweise von ≥ 2,1 bis ≤ 5 und mehr bevorzugt von ≥ 2,2 bis ≤ 4.

Erfindungsgemäß verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Erfindungsgemäß verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylendetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Erfindungsgemäß verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Reaktion von Epoxiden wie Propylenoxid mit Kohlendioxid erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Erfindungsgemäß verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle sind zum Beispiel Diole mit primären OH-Gruppen und zahlenmittleren Molekulargewichten Mₙ von vorzugsweise ≥ 18 g/mol bis ≤ 400 g/mol oder von ≥ 62 g/mol bis ≤ 200 g/mol wie 1,2-Ethandiol, 1,3-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1, 5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 18 g/mol bis ≤ 400 g/mol oder von ≥ 62 g/mol bis ≤ 200 g/mol.

Polyacrylatpolyole können durch radikalische Polymerisation von Hydroxylgruppen aufweisenden, olefinisch ungesättigte Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Die erfindungsgemäß einsetzbaren Treibmittel B) können im nahekritischen oder überkritischen Zustand eingesetzt werden. So kann beispielsweise überkritisches Kohlendioxid verwendet werden. Das Kohlendioxid kann von Außen eingetragen worden sein oder durch Reaktion von Wasser mit Isocyanatgruppen entstanden sein. Beispiele für weitere Treibmittel sind lineare C₁-C₅-Alkane, verzweigte C₄-C₅-Alkane und cyclische C₃-C₅-Alkane. Spezielle Beispiele für Treibmittel sind Methan, Ethan, Propan, n-Butan, iso-Butan, n-Pentan und/oder Cyclopentan. Weitere Beispiele sind die teil- oder perfluorierten Derivate von Methan, Ethan, Propan, n-Butan, iso-Butan, n-Pentan und/oder Cyclopentan.

Als Tensidkomponente C) erfindungsgemäß verwendbare alkoxylierte Alkanole sind beispielsweise Ether von linearen oder verzweigten Alkanolen mit ≥ 6 bis ≤ 30 Kohlenstoffatomen mit Polyalkylenglykolen mit ≥ 1 bis ≤ 100 Alkylenoxideinheiten. Beispielsweise können es Ether von linearen Alkanolen mit ≥ 15 bis ≤ 20 Kohlenstoffatomen mit Polyalkylenglykolen mit ≥ 5 bis ≤ 30 Ethylenoxideinheiten sein.

Weiterhin verwendbar sind alkoxylierte Alkylphenole, alkoxylierte Fettsäuren, Fettsäureester, Polyalkylenamine, Alkylsulfate, Alkylpolyether, Alkylpolyglucoside, Phosphatidylinositole, fluorierte Tenside, Polysiloxangruppen umfassende Tenside und/oder Bis(2-ethyl-1-hexyl)sulfosuccinat.

Fluorierte Tenside können perfluoriert oder teilfluoriert sein. Beispiele hierfür sind teilfluorierte ethoxylierte Alkanole oder Carbonsäuren wie Perfluoroctansäure.

Ein Polysiloxangruppen umfassendes Tensid kann beispielsweise ein siloxanterminierter Polyalkylenoxid-Polyether sein. Diese Tenside können linear oder verzweigt aufgebaut sein. Solch ein erfindungsgemäß einzusetzendes Tensid kann beispielsweise durch die Hydrosilylierung einer ungesättigten Verbindung mit einem Polysiloxan, das Si-H Gruppen trägt, erhalten werden. Die ungesättigte Verbindung kann unter anderem das Reaktionsprodukt von Allylalkohol mit Ethylenoxid oder Propylenoxid sein.

Beispielsweise kann das Tensid auch durch die Reaktion von Polyetheralkoholen mit einem Polysiloxan, das Si-Cl Gruppen trägt, erhalten werden. In dem Polyether können sämtliche Endgruppen siloxanterminiert sein. Es ist auch möglich, dass gemischte Endgruppen vorliegen, dass also Siloxanendgruppen und OH-Endgruppen oder durch Reaktion funktionalisierte OH-Endgruppen wie Methoxygruppen vorliegen. Der Siloxanterminus kann eine Monosiloxangruppe R₃Si-O- oder eine Oligo- oder Polysiloxangruppe R₃Si-O-[R₂Si-O]ₙ-[AO] mit beispielsweise n ≥ 1 bis ≤ 100 sein. Im Fall von verzweigten Tensiden kann der Siloxanterminus auch gemäß R₃Si-O-RSi[AO]-O-[R₂Si-O]ₘ-O-SiR₃ aufgebaut sein mit beispielsweise m = ≥ 0 bis ≤ 10 oder als Kammpolymer gemäß R₃Si-O-[RSi[AO]]ₙ-O-[R₂Si-O]ₘ-O-SiR₃ mit m+n = ≥ 0 bis ≤ 250 aufgebaut sein. Vorzugsweise ist in den genannten Fällen der Rest R eine Alkylgruppe, insbesondere eine Methylgruppe. Die Gruppe [AO] steht für einen Polyalkylenoxidrest, vorzugsweise Polyethylenoxid und/oder Polypropylenoxid. Die Gruppe [AO] kann auch über eine Verbindungsgruppe wie zum Beispiel C₃H₆ an das Siloxan angebunden werden.

In der erfindungsgemäßen Zusammensetzung enthalten ist weiterhin als Komponente D) ein Isocyanat mit einer NCO-Funktionalität von ≥ 2. Solche Isocyanate werden auch als Polyisocyanate bezeichnet. Folglich liegt nun ein Reaktionsgemisch vor, welches zu Polyurethan- oder aber auch Polyisocyanuratschäumen reagieren kann.

Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4-und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder ein höheres Homologes (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass in der Reaktionsmischung die Anzahl der NCO-Gruppen im Isocyanat und die Anzahl der gegenüber Isocyanaten reaktiven Gruppen der Komponente A) in einem Zahlenverhältnis von ≥ 70:100 bis ≤ 500:100 zueinander stehen. Diese Kenngröße kann auch in einem Bereich von ≥ 180:100 bis ≤ 330:100 oder aber auch von ≥ 90:100 bis ≤ 140:100 liegen.

Beispielhaft können in der erfindungsgemäßen Reaktionsmischung die Komponenten A), B), C) und D) in den folgenden Mengenanteilen vorkommen, wobei sich die Angaben stets zu ≤ 100 Gewichts-% addieren:
Komponente A) ≥ 5 Gewichts-% bis ≤ 70 Gewichts-%, vorzugsweise ≥ 10 Gewichts-% bis ≤ 60 Gewichts-%, mehr bevorzugt ≥ 20 Gewichts-% bis ≤ 50 Gewichts-%;
Komponente B) ≥ 1 Gewichts-% bis ≤ 30 Gewichts-%, vorzugsweise ≥ 2 Gewichts-% bis ≤ 20 Gewichts-%, mehr bevorzugt ≥ 3 Gewichts-% bis ≤ 15 Gewichts-%;
Komponente C) ≥ 1 Gewichts-% bis ≤ 50 Gewichts-%, vorzugsweise ≥ 3 Gewichts-% bis ≤ 30 Gewichts-%, mehr bevorzugt ≥ 5 Gewichts-% bis ≤ 25 Gewichts-%; und
Komponente D) ≥ 5 Gewichts-% bis ≤ 80 Gewichts-%, vorzugsweise ≥ 20 Gewichts-% bis ≤ 70 Gewichts-%, mehr bevorzugt ≥ 30 Gewichts-% bis ≤ 60 Gewichts-%.

Ausführungsformen der vorliegenden Erfindung werden nachfolgend beschrieben, wobei die Ausführungsformen frei miteinander kombiniert werden können, sofern sich aus dem Zusammenhang nicht eindeutig das Gegenteil ergibt.

In einer Ausführungsform der erfindungsgemäßen Reaktionsmischung umfasst das Isocyanat D) Diphenylmethan-4,4'-diisocyanat sowie Toluylendiisocyanat.

Überraschenderweise wurde gefunden, dass sich durch die Kombination von einem Isocyanat aus der Diphenylmethandiisocyanatreihe (2,2'-und/oder 2,4'- und/oder 4,4'-MDI oder auch ein polymeres MDI) mit einem Anteil eines CO₂ zumindest teilweise löslichen Isocyanats ein deutlich feinerer Schaum bildet.

Bevorzugt ist hierbei ein Isocyanat aus der Diphenylmethandiisocyanatreihe in Kombination mit TDI (vorzugsweise 2,4- und/oder 2,6-TDI).

In einer weiteren Ausführungsform der erfindungsgemäßen Reaktionsmischung ist das Isocyanat D) in der zweiten Phase enthalten in einem Anteil von ≥ 90 Gewichts-% bis ≤ 100 Gewichts-% der Gesamtmenge an Isocyanat D) in der Zusammensetzung. Vorzugsweise ist also das Isocyanat vollständig oder im Wesentlichen vollständig in der Treibmittelphase enthalten. Der Anteil des Isocyanats kann auch in einem Bereich von ≥ 95 Gewichts-% bis ≤ 100 Gewichts-% oder von ≥ 98 Gewichts-% bis ≤ 100 Gewichts-% liegen. Je mehr Isocyanat in der Treibmittelphase und entsprechend weniger in der Polyolphase gelöst ist, desto effektiver kann die Polymerisation an der Phasengrenzfläche ablaufen.

Vorteilhafterweise liegt in der erfindungsgemäßen Reaktionsmischung das Isocyanat D) im Treibmittel B) gelöst vor. Mit umfasst sind hierbei Mischungen verschiedener Isocyanate.

In einer weiteren Ausführungsform der erfindungsgemäßen Reaktionsmischung liegt diese bei einem Druck von ≥ 30 bar bis ≤ 300 bar und einer Temperatur von ≥ 0 °C bis ≤ 100 °C vor. Der Druck kann auch in einem Bereich von ≥ 40 bar bis ≤ 150 bar oder von ≥ 60 bar bis ≤ 100 bar liegen. Die Temperatur kann auch in einem Bereich von ≥ 10 °C bis ≤ 80 °C oder von ≥ 20 °C bis ≤ 60 °C liegen.

In einer weiteren Ausführungsform der erfindungsgemäßen Reaktionsmischung umfasst die gegenüber Isocyanaten reaktive Komponente A) ein difunktionelles Polyesterpolyol mit einer OH-Zahl von ≥ 240 mg KOH/g bis ≤ 340 mg KOH/g.

In einer weiteren Ausführungsform des erfindungsgemäßen Verfahrens umfasst die Tensidkomponente B) ein Polyethylenoxid-Polyether mit Oligodimethylsiloxan-Endgruppen, wobei die Zahl der Dimethylsiloxan-Einheiten ≤ 5 ist. Solch ein Polyether kann beispielsweise durch die idealisierte Formel R'O-[CH₂CH₂O]ₒ-X-SiR(O-SiR₃)((O-SiR₂)ₚR) mit R = CH₃ und R' = H, CH₃ oder COCH₃ dargestellt werden. Hierbei kann X eine optionale verbindende Gruppe wie Alkyl-α oder co-diyl sein, o ist ≥ 1 bis ≤ 100, vorzugsweise ≥ 5 bis ≤ 30 und mehr bevorzugt ≥ 10 bis ≤ 20 und p ist ≤ 2. Die Gruppe X kann beispielsweise -CH₂-CH₂-CH₂- sein. Ein bevorzugtes Tensid ist 3-(Polyoxyethylen)propylheptamethyltrisiloxan. Dieses ist kommerziell von der Firma Dow Corning unter dem Handelsnamen Q2-5211® erhältlich.

In einer weiteren Ausführungsform der erfindungsgemäßen Reaktionsmischung liegen die Komponenten in folgenden Anteilen vor, wobei die Summe der Gewichtsanteile der einzelnen Komponenten jeweils ≤ 100 Gewichts-% beträgt:
- Eine Mischung eines difunktionellen Polyesterpolyols mit einer OH-Zahl (DIN 53240) von ≥ 290 mg KOH/g bis ≤ 320 mg KOH/g mit Glyzerin in der Mischung in einem Anteil von ≥ 20 Gewichts-% bis ≤ 45 Gewichts-%;
- CO₂ in einem Anteil von ≥ 4 Gewichts-% bis ≤ 20 Gewichts-%;
- Ein Siloxan-Polyalkylenoxidcopolymer in einem Anteil von ≥ 5 Gewichts-% bis ≤ 25 Gewichts-%; und
- Eine Mischung aus Diphenylmethan-4,4'-diisocyanat samt Isomeren und höherfunktionellen Homologen mit 2,4- und 2,6-Toluylendiisocyanat in einem Anteil von ≥ 20 Gewichts-% bis ≤ 40 Gewichts-%.

Gegenstand der vorliegenden Erfindung ist weiterhin ein Verfahren zur Herstellung von Polyurethanschäumen, umfassend die Schritte:
- Bereitstellen von gegenüber Isocyanaten reaktiven Verbindungen A), Treibmittel B), Tenside C) und Isocyanate D), wobei die Komponenten eine Bedeutung gemäß den vorstehenden Definitionen aufweisen und wobei das Treibmittel im nahekritischen oder überkritischen Zustand vorliegt; und
- Erniedrigen des Drucks der erhaltenen Zusammensetzung, so dass das Treibmittel in den gasförmigen Zustand übergeht.

Das Isocyanat hält sich zumindest teilweise in der Treibmittelphase auf. Vorzugsweise ist es dort gelöst. Das in der Treibmittelphase befindliche Isocyanat reagiert nicht mit dem Polyol, solange nahekritische oder überkritische Bedingungen herrschen. Bei Expansion des Treibmittels kommen Isocyanat und Polyol direkt in Kontakt und es kann eine Grenzflächenpolymerisation ablaufen.

Vorzugsweise umfasst dieses Verfahren die Schritte:
- Bereitstellen einer Zusammensetzung umfassend gegenüber Isocyanaten reaktive Verbindungen A), Treibmittel B) und Tenside C) gemäß der vorliegenden Erfindung, wobei das Treibmittel im nahekritischen oder überkritischen Zustand vorliegt;
- Hinzufügen der Isocyanate D) gemäß der vorliegenden Erfindung, wobei das Isocyanat D) in das Treibmittel B) übergeht; und
- Erniedrigen des Drucks der erhaltenen Zusammensetzung, so dass das Treibmittel in den gasförmigen Zustand übergeht.

In dieser Variante wird zunächst eine Emulsion oder Mikroemulsion mit der Polyolphase und der Treibmittelphase hergestellt. Das nachfolgende hinzugefügte Isocyanat hält sich zumindest teilweise in der Treibmittelphase auf. Vorzugsweise ist es dort gelöst. Das in der Treibmittelphase befindliche Isocyanat reagiert nicht mit dem Polyol, solange nahekritische oder überkritische Bedingungen herrschen. Bei Expansion des Treibmittels kommen Isocyanat und Polyol direkt in Kontakt und es kann eine Grenzflächenpolymerisation ablaufen.

In einer Ausführungsform dieses Verfahrens wird die Treibmittel umfassende Zusammensetzung bei einem Druck von ≥ 1 bar bis ≤ 300 bar und bei einer Temperatur von ≥ 0 °C bis ≤ 100 °C gehalten. Der Druck kann auch in einem Bereich von ≥ 10 bar bis ≤ 180 bar oder von ≥ 20 bar bis ≤ 150 bar liegen. Die Temperatur kann auch in einem Bereich von ≥ 10 °C bis ≤ 80 °C oder von ≥ 20 °C bis ≤ 60 °C liegen.

In einer weiteren Ausführungsform dieses Verfahrens findet das Überführen der Treibmittelkomponente B) in den unterkritischen Zustand in einer geschlossenen Form statt, wobei die geschlossene Form nicht Teil eines Mischkopfs einer Mischanlage ist und so eingerichtet ist, dass deren inneres Volumen und/oder der in ihrem Inneren herrschende Druck nach dem Einbringen der Mischung durch externe Beeinflussung verändert werden kann.

Ein weiterer Gegenstand der vorliegenden Erfindung ist ein Verfahren zur Herstellung von Polyurethanschäumen, umfassend die Schritte:
- Bereitstellen einer Zusammensetzung umfassend gegenüber Isocyanaten reaktive Verbindungen A) und Tenside C) gemäß der vorliegenden Erfindung;
- Bereitstellen einer Zusammensetzung umfassend Treibmittel B) und Isocyanat D) gemäß der vorliegenden Erfindung, wobei das Treibmittel im nahekritischen oder überkritischen Zustand vorliegt und wobei das Isocyanat D) im Treibmittel B) enthalten ist;
- Mischen der beiden Zusammensetzungen;
- Erniedrigen des Drucks der erhaltenen Zusammensetzungs-Mischung, so dass das Treibmittel in den gasförmigen Zustand übergeht.

In dieser Variante liegt das Isocyanat bereits im nahekritischen oder überkritischen Treibmittel vor, bevor es mit der Polyolphase kombiniert wird. Vorzugsweise ist das Isocyanat im Treibmittel gelöst. Weiterhin ist bevorzugt, wenn nach dem Mischen der Polyolphase und der Treibmittelphase die erhaltene Zusammensetzung weiter unter Bedingungen gehalten wird, unter denen das Treibmittel nahekritisch oder überkritisch ist.

In einer Ausführungsform dieses Verfahrens wird die Treibmittel umfassende Zusammensetzung bei einem Druck von ≥ 1 bar bis ≤ 300 bar und bei einer Temperatur von ≥ 0 °C bis ≤ 100 °C gehalten. Der Druck kann auch in einem Bereich von ≥ 10 bar bis ≤ 180 bar oder von ≥ 20 bar bis ≤ 150 bar liegen. Die Temperatur kann auch in einem Bereich von ≥ 10 °C bis ≤ 80 °C oder von ≥ 20 °C bis ≤ 60 °C liegen.

Weiterhin betrifft die vorliegende Erfindung einen Polyurethanschaum, der durch ein vorstehend beschriebenes Verfahren erhalten wurde.

Der erfindungsgemäße Polyurethanschaum kann beispielsweise als Schaum mit einem mittleren Porendurchmesser von ≥ 10 nm bis ≤ 10000 nm vorliegen. Unabhängig davon kann auch die Porendichte des erfindungsgemäßen Polyurethanschaums von ≥ 10⁷ Poren/cm³ bis ≤ 10¹⁸ Poren/cm³ betragen.

Gegenstand der vorliegenden Erfindung ist ebenfalls die Verwendung einer erfindungsgemäßen Reaktionsmischung zur Herstellung von Polyurethanschäumen.

Das Prinzip der erfindungsgemäßen Verfahrens wird schematisch anhand der nachfolgenden Figuren 1 bis 3 erläutert. Es zeigen:
FIG. 1 eine Emulsion eines nahe- oder überkritischen Treibmittels mit einem Reaktanden in einer externen Phase mit einem anderem Reaktanden
FIG. 2 den Zustand der Emulsion aus FIG. 1 nach Druckerniedrigung
FIG. 3 eine vergrößerte Ansicht an der Phasengrenze während der Reaktion der Reaktanden
FIG. 4 bis 8 Mikroskopaufnahmen von Polyurethanschäumen

FIG. 1 zeigt eine Emulsion eines nahe- oder überkritischen Treibmittels mit gelöstem Reaktanden in einer externen Phase mit gelöstem anderen Reaktanden. Die Emulsion, welche auch eine Mikroemulsion sein kann, umfasst eine externe Phase 1 und eine interne, tröpfchenförmige Phase 2. In der polaren, externen Phase 1 befindet sich als ein Reaktand das schematisch dargestellte Polyol 3. Diese externe Phase 1 kann lösemittelfrei sein oder als zusätzliche Lösungsmittel Wasser, polare Lösemittel, flüchtige Lösemittel und deren Mischungen umfassen. Neben dem Polyol 3 können in der externen Phase 1 zusätzlich Polymere sowie Additive wie H₂O, Flammschutzmittel wie TCPP oder Salze, etc. enthalten sein.

In der unpolaren, internen Phase 2 befindet sich das nahekritische oder überkritische Treibmittel wie beispielsweise CO₂, Methan, Ethan, Propan oder deren Mischungen. Weiterhin befindet sich in der internen Phase 2 das schematisch dargestellte Isocyanat 4 mit einer Funktionalität von 2 NCO-Gruppen. Das Isocyanat 4 ist in der internen Phase 2 und somit im Treibmittel gelöst, suspendiert, emulgiert oder in sonstiger Form enthalten. Die Trennung zwischen der internen Phase 2 und der externen Phase 1 wird durch Tensidmoleküle 5 erreicht, welche mit ihren hydrophilen Kopf zur externen Phase 1 und mit ihrem lipophilen Schwanz zur internen Phase 2 gerichtet sind.

FIG. 2 zeigt den Zustand der Emulsion aus FIG. 1 nach Druckerniedrigung, also nachdem das nahekritische oder überkritische Fluid der internen Phase 2 in den gasförmigen Zustand übergegangen ist. Hierbei expandiert das Fluidtröpfchen. Dadurch reicht die Menge der Tensidmoleküle 5 nicht mehr aus, um die Trennung zwischen der internen Phase 2 und der externen Phase 1 zu erreichen. Es kommt also zum direkten Kontakt zwischen den beiden Phasen. Dieses ist durch die Phasengrenze 6 dargestellt. Weil das Fluid in der internen Phase 2 nun im gasförmigen Zustand vorliegt, sinkt dessen Vermögen zum Lösen, suspendieren, emulgieren oder auf sonstige Weise Aufnehmen des Isocyanats 4. Im Falle einer Lösung würde also das Isocyanat 4 ausfallen. Das ausgefallene Isocyanat 4 an der Phasengrenze 6 ist nicht durch Tensidmoleküle 5 von der polaren Phase getrennt, sondern kommt in direkten Kontakt zum Polyol 3. Folglich reagieren diese Reaktanden miteinander.

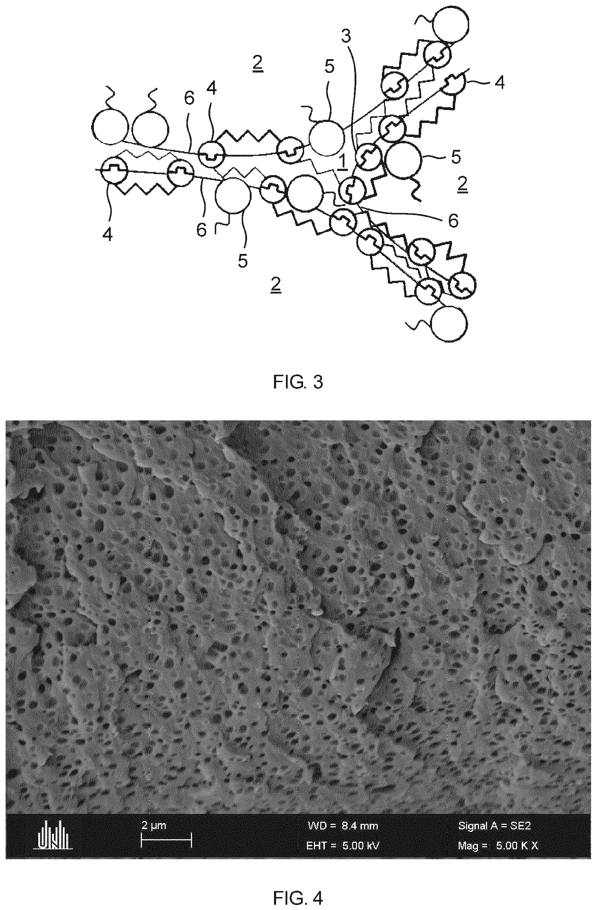

FIG. 3 zeigt eine vergrößerte Ansicht an der Phasengrenze während der Reaktion der Reaktanden. Die weiter expandierenden Gasbläschen der internen Phase 2 treffen aufeinander, so dass Isocyanatmoleküle 4 am Rand eines Gasbläschens der internen Phase 2 mit einem Polyolmolekül 3 in der externen Phase 1 reagieren können und über eine freie Funktionalität des Polyolmoleküls 3 mit einem Isocyanatmolekül 4 eines anderen Gasbläschens weiterreagieren können. Auf diese Weise wird die Zellwand des erhaltenen Schaums stabilisiert, so dass ein Schaum erhalten werden kann.

Die vorliegende Erfindung wird weiter anhand der nachfolgenden Beispiele erläutert.

### Glossar:

Desmodur® 44V20L: Gemisch von Diphenylmethan-4,4'-diisocyanat (MDI) mit Isomeren und höherfunktionellen Homologen mit einem NCO-Gehalt von 31,4 Gew.%, Bayer MaterialScience AG
Desmodur® 44V70L: Gemisch von Diphenylmethan-4,4'-diisocyanat (MDI) mit Isomeren und höherfunktionellen Homologen mit einem NCO-Gehalt von 30,9 Gew.%, Bayer MaterialScience AG
Desmodur® VP.PU 1806: Gemisch von Diphenylmethan-4,4'-diisocyanat (MDI) und Diphenylmethan-2,4'-diisocyanat, Bayer MaterialScience AG
Desmodur® T 80: 2,4- und 2,6-Toluylendiisocyanat (TDI) im Verhältnis von 80:20, Bayer MaterialScience AG
Desmophen® VP.PU 1431: Difunktionelles Polyesterpolyol, Bayer MaterialScience AG, OH-Zahl 310 mg KOH/g
DABCO: 1,4-Diazabicyclo[2.2.2]octan
DBTL: Dibutylzinndilaurat
Silwet® L-7607 : Siloxan-Polyalkylenoxidcopolymer der Firma Momentive

Die Löslichkeit verschiedener Isocyanate in Treibmitteln wurde untersucht, um geeignete Isocyanate zu bestimmen.

Die Löslichkeit von monomerem MDI (Desmodur® VP.PU 1806), Desmodur® 44V70L und von TDI (Desmodur® T 80) in Propan wurde bestimmt, indem gleiche Volumina Isocyanat und Propan bei einer Temperatur von 25°C und einem Druck von 220 bar vormischt wurde. Es zeigte sich, dass sich bei VP.PU 1806 und Desmodur 44V70L zwei Phasen bildeten und sich jeweils ca. 20% des Propans in der unteren Phase (Isocyanat) löste. Im Gegensatz hierzu war Desmodur® T 80 komplett mit Propan mischbar, d.h. es bildete sich eine Phase.

Die Löslichkeit von monomerem MDI (Desmodur® VP.PU 1806), Desmodur® 44V70L und von TDI Desmodur® T 80 in CO₂ wurde bestimmt, indem gleiche Volumina Isocyanat und CO₂ bei einer Temperatur von 25°C und einem Druck von 220 bar vormischt wurde. Es zeigte sich, dass sich bei VP.PU 1806 zwei Phasen bildeten und sich ca. 50% des Propans in der unteren Phase (Isocyanat) löste und bei Desmodur 44V70L bildeten sich zwei Phasen und es löste sich ca. 50% des Propans in der unteren Phase (Isocyanat). Im Gegensatz hierzu war Desmodur T 80 komplett mit CO₂ mischbar, d.h. es bildete sich eine Phase.

Bestimmung der kritischen Punkte in einer Mischung mit CO₂:

Es wurde für Desmodur T 80 und Hexamethylendiisocyanat die kritischen Parameter in einer Mischung mit CO₂ untersucht, damit die Treibmittelmischung über- bzw. nahekritisch ist. Dabei zeigte sich, dass der kritische Punkt bei einer Temperatur von 323 K für HDI bei einem Molenbruch von x_{c} = 0.94 und einem Druck von p_{c} = 165 bar ist. Für Desmodur T 80 ist der kritische Punkt bei einer Temperatur von 323 K bei einem Molenbruch von x_{c} = 0.90 und einem Druck von p_{c} = 159 bar.

Eine gemäß der obigen Lehre erhältliche Mikroemulsion wurde zu einem Polyurethanschaum umgesetzt. Hierbei wurde die Mischung aus Polyolen und Katalysatoren (DBTDL und DABCO) und Tensid bei 34 °C und einem Druck von 170 bar mit CO₂ versetzt. Ohne auf eine Theorie beschränkt zu sein, wird angenommen, dass sich hierbei eine Mikroemulsion von scCO₂-Tröpfchen in der Polyolphase bildete. Diese Emulsion wurde in einem Hochdruck-Mischkopf mit dem Polyisocyanat versetzt. Anschließend wurde die Reaktionsmischung in eine Form mit einem bestimmten Gegendruck eingebracht. Folglich herrschten bei den erfindungsgemäßen Beispielen bezüglich des CO₂ in der Form immer noch überkritische Bedingungen. Erst nach dem Einbringen in die auf 35°C temperierte Form und einer gewissen Verweilzeit wurde der Druck auf Normaldruck gesenkt. Die Verweilzeit wurde für jeden Schaum optimiert. Die Gewichtsangaben in den Beispielen sind in Gewichtsteilen angegeben. Das gesamte Schussgewicht betrug jeweils 120 g.

| **Komponenten** | **Beispiel 1** | **Beispiel 2** | **Beispiel 3** | **Beispiel 4** | **Vergleichsbeispiel 5** |
|---|---|---|---|---|---|
| Desmophen® VP.PU 1431 | 95,00 | 95,00 | 95,00 | 95,00 | 95,00 |
| Glyzerin | 15,00 | 15,00 | 15,00 | 15,00 | 15,00 |
| Silwet L-7607 | 45,00 | 45,00 | 45,00 | 45,00 | 45,00 |
| Dabco | 0,28 | 0,28 | 0,28 | 0,28 | 0,28 |
| DBTDL | 0,07 | 0,07 | 0,07 | 0,07 | 0,07 |
| | | | | | |
| CO₂ | 25,40 | 25,5 | 17,00 | 15,70 | 17,30 |
| | | | | | |
| Desmodur ® 44V20L | 104,19 | 104,19 | 104,19 | 48,07 | 122,0 |
| Desmodur® T80 | 11,58 | 11,58 | 11,58 | 48,07 | 0 |
| | | | | | |
| **Kennzahl** | 90 | 90 | 90 | 90 | 90 |
| Isocyanattemperatur [°C] | 34 | 34 | 35 | 34 | 34 |
| Polyoltemperatur [°C] | 35 | 34 | 34 | 35 | 34 |
| Mischzeit [sec] | 2 | 2 | 2 | 2 | 2 |
| Gegendruck [bar] | 100 | 100 | 100 | 100 | 30 |
| Verweilzeit | 20 min | 34 sec | 32 sec | 32 sec | 32 sec |
| Entformzeit [min] | 30 | 30 | 30 | 30 | 30 |

FIG. 4 zeigt eine elektronenmikroskopische Aufnahme des Polyurethanschaums aus Beispiel 1. Dabei zeigt sich, dass die durchschnittliche Porengröße deutlich kleiner als 500 nm ist.

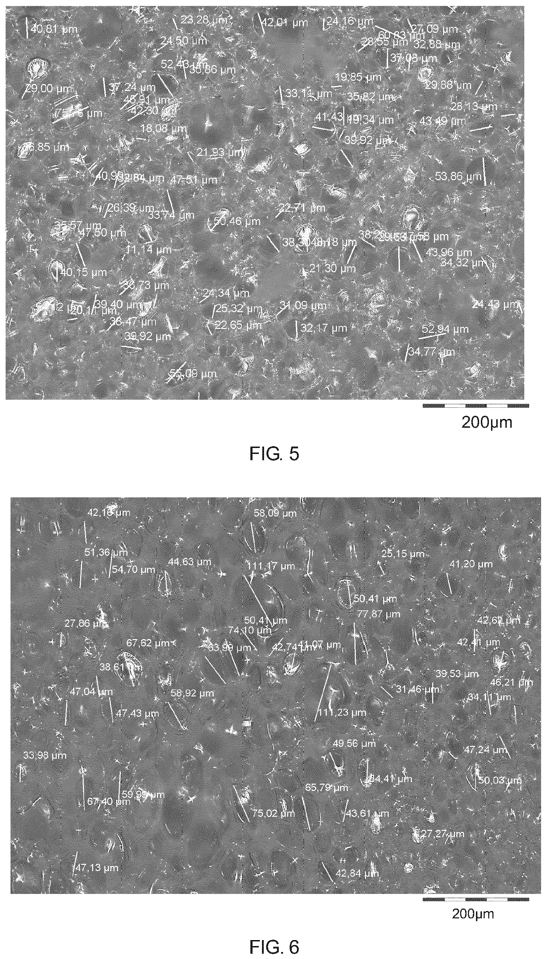

FIG. 5 zeigt eine lichtmikroskopische Aufnahme des Polyurethanschaums aus Beispiel 2. Dabei zeigt sich einen Porengröße von deutlich unter 50 µm.

FIG. 6 zeigt eine lichtmikroskopische Aufnahme des Polyurethanschaums aus Beispiel 3. Dabei zeigt sich einen Porengröße von deutlich unter 80 µm.

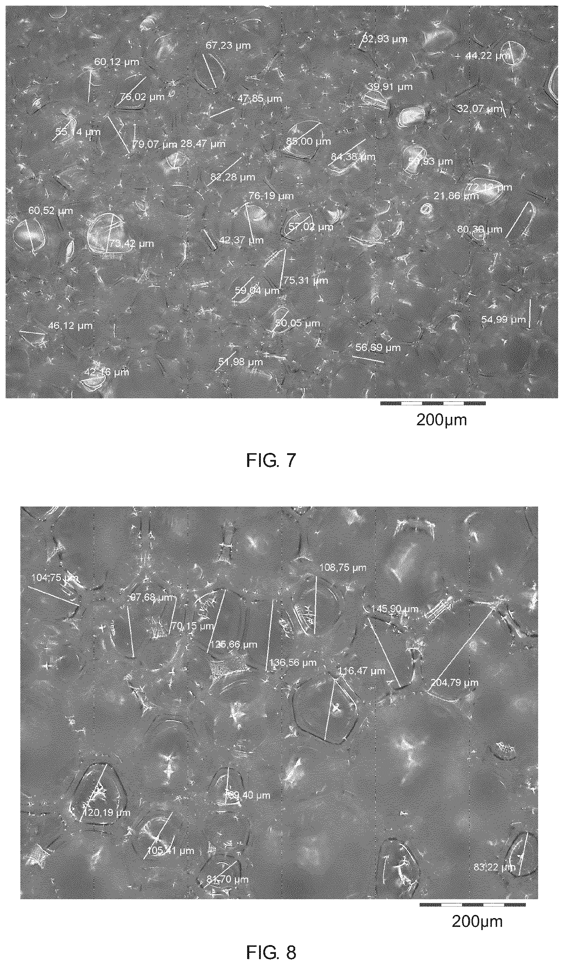

FIG. 7 zeigt eine lichtmikroskopische Aufnahme des Polyurethanschaums aus Beispiel 4. Dabei zeigt sich einen Porengröße von deutlich unter 60 µm.

FIG. 8 zeigt eine lichtmikroskopische Aufnahme des Polyurethanschaums aus Vergleichsbeispiel 5. Dabei zeigt sich einen Porengröße von deutlich über 100 µm.

## Patentansprüche

1. Emulsionsförmige Reaktionsmischung, geeignet zur Weiterreaktion zu Polyurethanen, umfassend eine erste und eine zweite Phase in der Emulsion und weiterhin umfassend die folgenden Komponenten:
A) gegenüber Isocyanaten reaktive Verbindungen, ausgewählt aus der Gruppe umfassend Polyole, Polyetherpolyole, Polyesterpolyole, Polycarbonatpolyole, Polyetheresterpolyole, und/oder Polyacrylatpolyole, wobei weiterhin die OH-Zahl dieser Komponente A) ≥ 100 mg KOH/g bis ≤ 800 mg KOH/g beträgt und die durchschnittliche OH-Funktionalität dieser Komponente A) ≥2 beträgt;
B) Treibmittel, ausgewählt aus der Gruppe umfassend lineare, verzweigte oder cyclische C₁- bis C₅-Alkane, lineare, verzweigte oder cyclische C₁- bis C₅-Fluoralkane und/oder CO₂;
C) Tenside, ausgewählt aus der Gruppe umfassend alkoxylierte Alkanole, alkoxylierte Alkylphenole, alkoxylierte Fettsäuren, Fettsäureester, Polyalkylenamine, Alkylsulfate, Alkylpolyether, Alkylpolyglucoside, Phosphatidylinositole, fluorierte Tenside, Polysiloxangruppen umfassende Tenside und/oder Bis(2-ethyl-1-hexyl)sulfosuccinat; und
D) Isocyanate mit einer NCO-Funktionalität von ≥ 2;
wobei die gegenüber Isocyanaten reaktive Verbindungen A) in der ersten Phase der Emulsion vorliegen und das Treibmittel B) in der zweiten Phase,
**dadurch gekennzeichnet, dass**
das Treibmittel B) im nahekritischen oder überkritischen Zustand vorliegt und dass weiterhin das Isocyanat D) in der zweiten Phase enthalten ist in einem Anteil von ≥ 10 Gewichts-% der Gesamtmenge an Isocyanat D) in der Zusammensetzung.

2. Reaktionsmischung gemäß Anspruch 1, wobei das Isocyanat D) Diphenylmethan-4,4'-diisocyanat sowie Toluylendiisocyanat umfasst.

3. Reaktionsmischung gemäß Anspruch 1, wobei das Isocyanat D) im Treibmittel B) gelöst vorliegt.

4. Reaktionsmischung gemäß Anspruch 1, wobei die Reaktionsmischung bei einem Druck von ≥ 30 bar bis ≤ 300 bar und einer Temperatur von ≥ 0 °C bis ≤ 100 °C vorliegt.

5. Reaktionsmischung gemäß Anspruch 1, wobei die gegenüber Isocyanaten reaktive Komponente A) ein difunktionelles Polyesterpolyol mit einer OH-Zahl von ≥ 240 mg KOH/g bis ≤ 340 mg KOH/g umfasst.

6. Reaktionsmischung gemäß Anspruch 1, wobei die Tensidkomponente B) ein Polyethylenoxid-Polyether mit Oligodimethylsiloxan-Endgruppen umfasst, wobei die Zahl der Dimethylsiloxan-Einheiten ≤ 5 ist.

7. Reaktionsmischung gemäß Anspruch 1, wobei die Komponenten in folgenden Anteilen vorliegen und wobei die Summe der Gewichtsanteile der einzelnen Komponenten jeweils ≤ 100 Gewichts-% beträgt:
- Eine Mischung eines difunktionellen Polyesterpolyols mit einer OH-Zahl von ≥ 290 mg KOH/g bis ≤ 320 mg KOH/g mit Glyzerin in der Mischung in einem Anteil von ≥ 20 Gewichts-% bis ≤ 45 Gewichts-%;
- CO₂ in einem Anteil von ≥ 4 Gewichts-% bis ≤ 20 Gewichts-%;
- Ein Siloxan-Polyalkylenoxidcopolymer in einem Anteil von ≥ 5 Gewichts-% bis ≤ 25 Gewichts-%; und
- Eine Mischung aus Diphenylmethan-4,4'-diisocyanat samt Isomeren und höherfunktionellen Homologen mit 2,4- und 2,6-Toluylendiisocyanat in einem Anteil von ≥ 20 Gewichts-% bis ≤ 40 Gewichts-%.

8. Verfahren zur Herstellung von Polyurethanschäumen aus einer emulsionsförmigen Reaktionsmischung gemäß Anspruch 1, umfassend die Schritte:
- Bereitstellen von gegenüber Isocyanaten reaktiven Verbindungen A), Treibmittel B), Tenside C) und Isocyanate D), wobei die Komponenten eine Bedeutung gemäß Anspruch 1 aufweisen und wobei das Treibmittel im nahekritischen oder überkritischen Zustand vorliegt; und
- Erniedrigen des Drucks der erhaltenen Zusammensetzung, so dass das Treibmittel in den gasförmigen Zustand übergeht.

9. Verfahren gemäß Anspruch 8, wobei die Treibmittel umfassende Zusammensetzung bei einem Druck von ≥ 1 bar bis ≤ 300 bar und bei einer Temperatur von ≥ 0 °C bis ≤ 100 °C gehalten wird.

10. Verfahren gemäß Anspruch 8, wobei das Überführen der Treibmittelkomponente B) in den unterkritischen Zustand in einer geschlossenen Form stattfindet, wobei die geschlossene Form nicht Teil eines Mischkopfs einer Mischanlage ist und so eingerichtet ist, dass deren inneres Volumen und/oder der in ihrem Inneren herrschende Druck nach dem Einbringen der Mischung durch externe Beeinflussung verändert werden kann.

11. Verfahren zur Herstellung von Polyurethanschäumen, umfassend die Schritte:
- Bereitstellen einer Zusammensetzung umfassend gegenüber Isocyanaten reaktive Verbindungen A) und Tenside C) gemäß Anspruch 1;
- Bereitstellen einer Zusammensetzung umfassend Treibmittel B) und Isocyanat D) gemäß Anspruch 1, wobei das Treibmittel im nahekritischen oder überkritischen Zustand vorliegt und wobei das Isocyanat D) im Treibmittel B) enthalten ist;
- Mischen der beiden Zusammensetzungen;
- Erniedrigen des Drucks der erhaltenen Zusammensetzungs-Mischung, so dass das Treibmittel in den gasförmigen Zustand übergeht.

12. Polyurethanschaum, erhalten durch ein Verfahren gemäß Anspruch 8 oder 11.

13. Polyurethanschaum gemäß Anspruch 12, vorliegend als Schaum mit einem mittleren Porendurchmesser von ≥ 10 nm bis ≤ 10000 nm.

14. Polyurethanschaum gemäß Anspruch 12 mit einer Porendichte von ≥ 10⁷ Poren/cm³ bis ≤ 10¹⁸ Poren/cm³.

15. Verwendung einer Reaktionsmischung gemäß Anspruch 1 zur Herstellung von Polyurethanschäumen.

## Claims

1. Reaction mixture in emulsion form, suitable for conversion into polyurethanes, comprising a first phase and a second phase in the emulsion and further comprising the following components:
A) isocyanate-reactive compounds selected from the group comprising polyols, polyetherpolyols, polyesterpolyols, polycarbonatepolyols, polyetheresterpolyols, and/or polyacrylatepolyols, wherein further the OH number of this component A) is ≥ 100 mg KOH/g to ≤ 800 mg KOH/g and the average OH functionality of this component A) is ≥ 2;
B) blowing agents selected from the group comprising linear, branched or cyclic C₁-C₅-alkanes, linear, branched or cyclic C₁-C₅-fluoroalkanes and/or CO₂;
C) surfactants selected from the group comprising alkoxylated alkanols, alkoxylated alkylphenols, alkoxylated fatty acids, fatty acid esters, polyalkyleneamines, alkyl sulphates, alkyl polyethers, alkylpolyglucosides, phosphatidylinositols, fluorinated surfactants, surfactants comprising siloxane groups, and/or bis(2-ethyl-1-hexyl) sulphosuccinate; and
D) socyanates having an NCO functionality of ≥ 2;
wherein the isocyanate-reactive compounds A) are present in the first phase of the emulsion and the blowing agent B) is present in the second phase,
**characterized in that**
the blowing agent B) is present in the near-critical or supercritical state and further **in that** the isocyanate D) is present in the second phase in a proportion of ≥ 10% by weight of the total amount of isocyanate D) in the composition.

2. Reaction mixture according to Claim 1, wherein the isocyanate D) comprises diphenylmethane 4,4'-diisocyanate and also tolylene diisocyanate.

3. Reaction mixture according to Claim 1, wherein the isocyanate D) is dissolved in blowing agent B).

4. Reaction mixture according to Claim 1, wherein the reaction mixture is at a pressure of ≥ 30 bar to ≤ 300 bar and a temperature of ≥ 0°C to ≤ 100°C.

5. Reaction mixture according to Claim 1, wherein the isocyanate-reactive component A) comprises a difunctional polyesterpolyol having an OH number of ≥ 240 mg KOH/g to ≤ 340 mg KOH/g.

6. Reaction mixture according to Claim 1, wherein the surfactant component B) is a polyethylene oxide polyether with oligodimethylsiloxane end groups, wherein the number of dimethylsiloxane units is ≤ 5.

7. Reaction mixture according to Claim 1, wherein the components are present in the following proportions and wherein the weight proportions of the individual components each sum to ≤ 100% by weight:
- a mixture of a difunctional polyesterpolyol having an OH number of ≥ 290 mg KOH/g to ≤ 320 mg KOH/g with glycerol in the mixture in a proportion of ≥ 20% by weight to ≤ 45% by weight;
- CO₂ in a proportion of ≥ 4% by weight to ≤ 20% by weight;
- a siloxane-polyalkylene oxide copolymer in a proportion of ≥ 5% by weight to ≤ 25% by weight; and
- a mixture of diphenylmethane 4,4'-diisocyanate plus isomers and higher-functional homologues with 2,4- and 2,6-tolylene diisocyanates in a proportion of ≥ 20% by weight to ≤ 40% by weight.

8. Method of producing polyurethane foams from a reaction mixture in emulsion form according to Claim 1, comprising the steps of:
- providing isocyanate-reactive compounds A), blowing agents B), surfactants C) and isocyanates D), wherein the components have a meaning according to Claim 1 and wherein the blowing agent is present in the near-critical or supercritical state; and
- reducing the pressure of the composition obtained, so the blowing agent transitions into the gaseous state.

9. Method according to Claim 8, wherein the composition comprising blowing agent is maintained at a pressure of ≥ 1 bar to ≤ 300 bar and at a temperature of ≥ 0°C to ≤ 100°C.

10. Method according to Claim 8, wherein the converting of blowing agent component B) into the subcritical state takes place in a closed mould, wherein the closed mould is not part of a mixing head of a mixing rig and is set up such that its internal volume and/or the pressure prevailing in its interior can be changed by external agency after the mixture has been introduced.

11. Method of producing polyurethane foams, comprising the steps of:
- providing a composition comprising isocyanate-reactive compounds A) and surfactants C) according to Claim 1;
- providing a composition comprising blowing agent B) and isocyanate D) according to Claim 1, wherein the blowing agent is present in the near-critical or supercritical state and wherein the isocyanate D) is present in blowing agent B);
- mixing the two compositions;
- reducing the pressure of the resulting composition mixture, so the blowing agent transitions into the gaseous state.

12. Polyurethane foam obtained by a method according to Claim 8 or 11.

13. Polyurethane foam according to Claim 12 in the form of a foam having an average pore diameter of ≥ 10 nm to ≤ 10 000 nm.

14. Polyurethane foam according to Claim 12 having a pore density of ≥ 10⁷ pores/cm³ to ≤ 10¹⁸ pores/cm³.

15. Use of a reaction mixture according to Claim 1 for producing polyurethane foams.

## Revendications

1. Mélange réactionnel sous la forme d'une émulsion, approprié pour la réaction secondaire de polyuréthanes, comprenant une première et une seconde phase dans l'émulsion et comprenant en outre les composants suivants :
A) des composés réactifs avec les isocyanates, choisis dans le groupe comprenant les polyols, les polyéther-polyols, les polyester-polyols, les polycarbonate-polyols, les polyéther-ester-polyols et/ou les polyacrylate-polyol, l'indice OH de ce composant A) étant par ailleurs de ≥ 100 mg KOH/g à ≤ 800 mg KOH/g, et la fonctionnalité OH moyenne de ce composant A) étant ≥ 2 ;
B) des agents gonflants, choisis dans le groupe comprenant les alcanes en C₁ à C₅ linéaires, ramifiés ou cycliques, les fluoroalcanes en C₁ à C₅ linéaires, ramifiés ou cycliques, et/ou CO₂ ;
C) des tensioactifs, choisis dans le groupe comprenant les alcanols alcoxylés, les alkylphénols alcoxylés, les acides gras alcoxylés, les esters d'acides gras, les polyalkylène-amines, les sulfates d'alkyle, les polyéthers d'alkyle, les polyglucosides d'alkyle, les phosphatidylinositols, les tensioactifs fluorés, les tensioactifs comprenant des groupes polysiloxane et/ou le sulfosuccinate de bis(2-éthyl-1-hexyle) ; et
D) des isocyanates ayant une fonctionnalité NCO ≥ 2 ;
les composés réactifs avec les isocyanates A) étant présents dans la première phase de l'émulsion et l'agent gonflant B) dans la seconde phase,
**caractérisé en ce que**
l'agent gonflant B) se présente à l'état presque critique ou supercritique, et **en ce que** l'isocyanate D) est par ailleurs contenu dans la seconde phase en une proportion ≥ 10 % en poids de la quantité totale d'isocyanate D) dans la composition.

2. Mélange réactionnel selon la revendication 1, dans lequel l'isocyanate D) comprend le 4,4'-diisocyanate de diphénylméthane et le diisocyanate de toluylène.

3. Mélange réactionnel selon la revendication 1, dans lequel l'isocyanate D) est présent sous forme dissoute dans l'agent gonflant B).

4. Mélange réactionnel selon la revendication 1, dans lequel le mélange réactionnel se présente à une pression de ≥ 30 bar à ≤ 300 bar et à une température de ≥ 0 °C à ≤ 100 °C.

5. Mélange réactionnel selon la revendication 1, dans lequel le composant réactif avec les isocyanates A) comprend un polyester-polyol bifonctionnel ayant un indice OH de ≥ 240 mg KOH/g à ≤ 340 mg KOH/g.

6. Mélange réactionnel selon la revendication 1, dans lequel le composant tensioactif B) est un polyéther de polyoxyde d'éthylène contenant des groupes terminaux oligodiméthylsiloxane, le nombre d'unités diméthylsiloxane étant ≤ 5.

7. Mélange réactionnel selon la revendication 1, dans lequel les composants sont présents en les proportions suivantes et la somme des proportions en poids des composants individuels est à chaque fois ≤ 100 % en poids :
- un mélange d'un polyester-polyol bifonctionnel ayant un indice OH de ≥ 290 mg KOH/g à ≤ 320 mg KOH/g avec de la glycérine dans le mélange en une proportion de ≥ 20 % en poids à ≤ 45 % en poids ;
- du CO₂ en une proportion de ≥ 4 % en poids à ≤ 20 % en poids ;
- un copolymère siloxane-polyoxyde d'alkylène en une proportion de ≥ 5 % en poids à ≤ 25 % en poids ; et
- un mélange de 4,4'-diisocyanate de diphénylméthane plus les isomères et homologues de fonctionnalité plus élevée avec du diisocyanate de 2,4- et 2,6-toluylène en une proportion de ≥ 20 % en poids à ≤ 40 % en poids.

8. Procédé de fabrication de mousses de polyuréthane à partir d'un mélange réactionnel sous la forme d'une émulsion selon la revendication 1, comprenant les étapes suivantes :
- la préparation de composés réactifs avec les isocyanates A), d'agents gonflants B), de tensioactifs C) et d'isocyanates D), les composants ayant une signification selon la revendication 1 et l'agent gonflant se présentant à l'état presque critique ou supercritique ; et
- la réduction de la pression de la composition obtenue, de sorte que l'agent gonflant passe à l'état gazeux.

9. Procédé selon la revendication 8, dans lequel la composition comprenant l'agent gonflant est maintenue à une pression de ≥ 1 bar à ≤ 300 bar et à une température de ≥ 0 °C à ≤ 100 °C.

10. Procédé selon la revendication 8, dans lequel le passage du composant agent gonflant B) à l'état supercritique a lieu dans un moule fermé, le moule fermé ne faisant pas partie d'une tête de mélange d'une unité de mélange, et étant conçu de sorte que son volume intérieur et/ou la pression qui règne à l'intérieur de celui-ci puissent être modifiés par une influence extérieure après l'introduction du mélange.

11. Procédé de fabrication de mousses de polyuréthane, comprenant les étapes suivantes :
- la préparation d'une composition comprenant des composés réactifs avec les isocyanates A) et des tensioactifs C) selon la revendication 1 ;
- la préparation d'une composition comprenant des agents gonflants B) et l'isocyanate D) selon la revendication 1, l'agent gonflant se présentant à l'état presque critique ou supercritique, et l'isocyanate D) étant contenu dans l'agent gonflant B) ;
- le mélange des deux compositions ;
- la réduction de la pression du mélange de compositions obtenu de sorte que l'agent gonflant passe à l'état gazeux.

12. Mousse de polyuréthane, obtenue par un procédé selon la revendication 8 ou 11.

13. Mousse de polyuréthane selon la revendication 12, qui se présente sous la forme d'une mousse ayant un diamètre de pore moyen de ≥ 10 nm à ≤ 10 000 nm.

14. Mousse de polyuréthane selon la revendication 12, ayant une densité de pores de ≥ 10⁷ pores/cm³ à 10¹⁸ pores/cm³.

15. Utilisation d'un mélange réactionnel selon la revendication 1 pour la fabrication de mousses de polyuréthane.
